# FASCICULE DE BREVET EUROPEEN

(11) **EP 0 809 458 B1**
(45) Date de publication et mention de la délivrance du brevet: **09.09.1998**
(21) Numéro de dépôt: 96903082.4
(22) Date de dépôt: 12.02.1996
(51) Int. Cl.: A47J 44/00, A47J 43/08

(54) **BATTEUR-MIXEUR ELECTRIQUE A MAIN**
ELEKTRISCH BETRIEBENER HANDSCHLÄGER UND -RÜHRER
HAND-HELD ELECTRIC MIXER

(30) Priorité: 16.02.1995 FR 9501796
(43) Date de publication de la demande: 03.12.1997
(73) Titulaire: MOULINEX S.A., 75008 Paris (FR)
(72) Inventeur: HARRY, Jean-Michel, F-72260 Marrolles-les-Braults (FR); TROCHERIE, Jean-Pierre, F-53370 Saint-Pierre-des-Nids (FR); LINGER, Jean-Jacques, F-53000 Laval (FR)
(74) Mandataire: Busquets, Jean-Pierre
(86) Numéro de dépôt international: FR9600220
(87) Numéro de publication internationale: WO9625081

(56) Documents cités:
- CH-A- 381 374
- DE-A- 2 802 155
- DE-B- 2 904 159
- US-A- 3 595 093

## Description

La présente invention concerne un batteur-mixeur électrique à main, notamment un batteur-mixeur ménager, comprenant un corps de forme générale prismatique contenant un moteur d'entraînement électrique qui, en considérant le batteur-mixeur dans sa position d'utilisation normale d'au moins un accessoire dit de battage tel que, par exemple, un fouet, est logé horizontalement dans la partie inférieure dudit corps, un dispositif rotatif d'accouplement dudit accessoire de battage qui est agencé dans la partie avant dudit corps en débouchant dans la base de celui-ci, et qui est relié à l'extrémité antérieure de l'arbre du moteur, un entraîneur rotatif porté par l'extrémité postérieure de l'arbre du moteur et logé dans un fût cylindrique de fixation d'un accessoire dit de mixage qui s'étend horizontalement dans la partie arrière dudit corps et qui est ouvert en regard d'une ouverture pratiquée dans la paroi arrière du corps et destinée au passage de l'accessoire de mixage, lequel accessoire de mixage comporte un arbre dont une extrémité est adaptée à venir s'accoupler avec ledit entraineur, ainsi qu'un organe d'éjection agencé verticalement au-dessus et en communication avec le dispositif d'accouplement de l'accessoire de battage et déplaçable en hauteur d'une position basse à une position haute sous l'action de l'accessoire de battage lors de sa mise en place complète, et inversement de cette position haute à la position basse dans laquelle il libère ledit accessoire de battage sous l'action d'un organe de commande manuelle.

On entend par accessoire de battage un outil de travail du type fouet ou malaxeur, et par accessoire de mixage un accessoire à outil de travail tournant à vitesse élevée du type pied mixeur à hélice rotative, ou encore du type bol mixeur à couteau rotatif.

Avec un appareil connu de ce genre, il peut arriver que par imprudence ou négligence, l'utilisateur monte en même temps l'accessoire de battage et l'accessoire de mixage dans le corps de l'appareil, puis effectue la mise en marche de l'appareil ; les deux outils de travail en mouvement simultané, de types respectifs différents, risquent alors d'exposer l'utilisateur à de graves blessures.

Un appareil à main de ce type est par exemple décrit dans US-A-3 595 093.

L'inventions a pour but de supprimer ce risque et de réaliser un batteur-mixeur électrique à main, du type exposé ci-dessus, qui garantisse d'une manière simple une sécurité absolue à l'utilisateur en interdisant la mise en place concomitante des deux accessoires, respectivement de battage et de mixage, et donc leur fonctionnement simultané.

Selon l'invention, le batteur-mixeur comporte de plus des moyens mécaniques mobiles sollicités par des moyens de rappel élastique et adaptés, d'une part, à rendre libre le déplacement de l'organe d'éjection tout en entravant le passage à l'intérieur du fût de manière à permettre uniquement la mise en place de l'accessoire de battage, et d'autre part, à bloquer, à l'encontre desdits moyens de rappel élastique, l'organe d'éjection en position basse tout en dégageant la passage à l'intérieur du fût de manière à permettre uniquement la mise en place de l'accessoire de mixage.

Ainsi, grâce à ces moyens mécaniques de sécurité agissant par interaction sélective entre l'organe d'éjection et l'intérieur du fût de l'appareil, il est désormais impossible de mettre simultanément en place les deux accessoires, respectivement de battage et de mixage, évitant ainsi tout risque de blessure lors de la mise en marche de l'appareil.

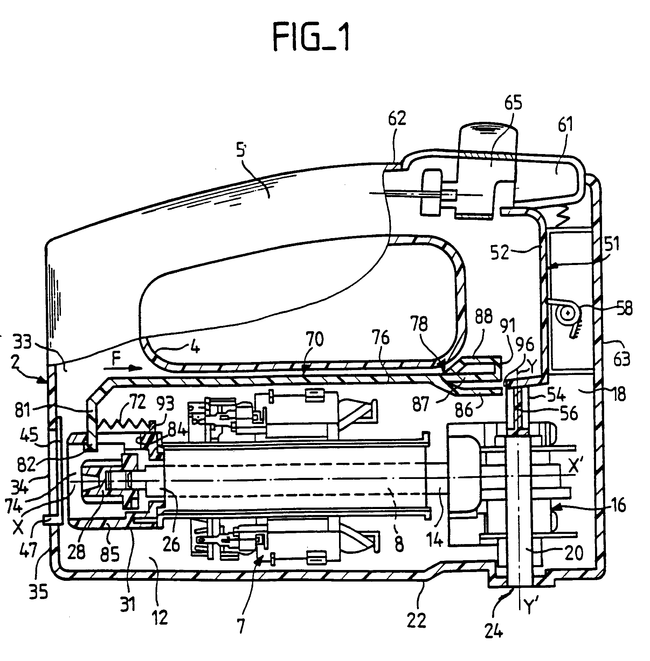

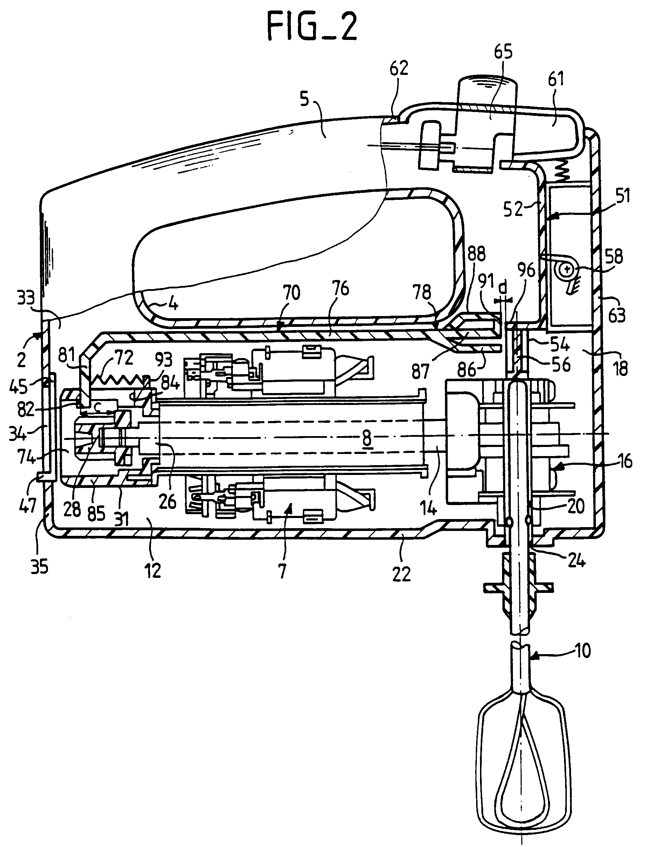

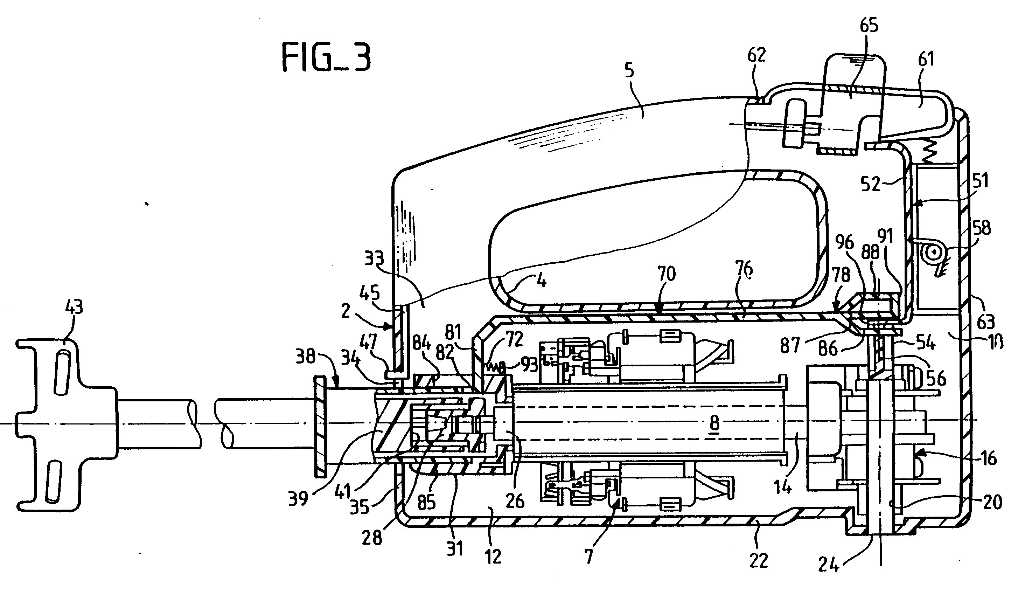

Les caractéristiques et avantages de l'invention ressortiront d'ailleurs de la description qui va suivre, à titre d'exemple non limitatif, en référence aux dessins annexés dans lesquels :
- -: la figure 1 est une vue partielle en coupe verticale d'un batteur-mixeur selon l'invention, en position arrêt et en l'absence d'accessoire ;
- -: la figure 2 est une vue identique à la figure 1, mais en présence d'un accessoire de battage ; et
- -: la figure 3 est une vue identique à la figure 1, mais en présence d'un accessoire de mixage.

Le batteur-mixeur à main illustré à la figure 1 comprend un corps 2 de forme générale prismatique présentant une partie évidée 4 qui délimite une poignée 5, et contenant un moteur d'entraînement électrique 7 muni d'un arbre 8 d'axe XX' et logé, en utilisation normale avec au moins un accessoire dit de battage tel que, par exemple, un fouet 10 comme montré à la figure 2, dans la partie inférieure 12 du corps 2 en s'étendant horizontalement.

L'arbre 8 du moteur d'entraînement 7 porte à son extrémité antérieure 14 une vis sans fin non représentée qui coopère avec deux pignons hélicoïdaux tournant chacun autour d'un axe vertical YY' perpendiculaire à l'axe XX', et qui forme avec ceux-ci un réducteur 16. Ces deux pignons hélicoïdaux sont situés dans la partie avant 18 du corps 2 et sont liés respectivement à deux dispositifs d'accouplement 20 d'axe YY', dont un seul est visible à la figure 1, qui debouchent dans la base 22 du corps 2 par deux ouvertures 24 dans lesquelles peuvent être engagés côte à côte, ou l'un derrière l'autre, deux fouets 10 dont un seul est montré à la figure 2.

En regard de la figure 1, l'extrémité postérieure 26 de l'arbre 8 du moteur d'entraînement 7 porte un entraîneur rotatif 28 logé dans un fût cylindrique 31 qui s'étend horizontalement dans la partie arrière 33 du corps 2 et qui est ouvert en regard d'une ouverture 34 pratiquée dans la paroi arrière 35 du corps 2 et destinée à l'engagement d'un accessoire de mixage tel que, par exemple, un pied mixeur 38 comme montré à la figure 3, lequel pied mixeur 38 (figure 3) étant destiné à venir se fixer, par exemple par vissage, dans le fût 31 et renfermant un arbre 39 dont l'extrémité dite antérieure 41, opposée à la cloche 43 logeant une hélice non figurée, est adaptée à venir s'accoupler avec l'entraîneur 28.

Comme le montre la figure 1, l'ouverture d'accouplement 34 est fermée par un obturateur coulissant 45 qui est guidé sur la face interne de la paroi arrière 35 du corps 2 avec possibilité de coulissement dans la direction verticale et qui est fermé à l'aide d'un organe de manoeuvre manuelle 47 faisant saillie vers l'arrière à travers l'ouverture 34.

Le batteur-mixeur comporte en outre un organe d'éjection mobile 51 agencé verticalement dans la partie avant 18 du corps 2 et comprenant une partie supérieure 52 de profil en forme de U vertical et une partie inférieure 54 composée de deux pions verticaux cylindriques 56, dont un seul est visible à la figure 1, présentant à leur partie supérieure un passage (non figuré) et coopérant chacun avec le dispositif d'accouplement correspondant 20. Cet organe d'éjection 51 est sollicité par un ressort 58 et est déplaçable en hauteur pour passer d'une position basse, définie en l'absence des fouets (figure 1), à une position haute dans laquelle les pions 56 sont actionnés par les fouets lors de leur engagement complet, et donc de leur verrouillage, dans le dispositif d'accouplement associé 20 (figure 2), et inversement de cette position haute correspondant au montage des fouets à la position basse dans laquelle l'organe d'éjection libère les fouets sous l'action d'un bouton de commande manuelle 61 monté élastiquement en avant de la poignée 5 dans la paroi supérieure 62 du corps 2, à proximité immédiate de la paroi avant 63 dudit corps.

Sur les figures, on a désigné en 65 une manette montée dans la paroi supérieure 62 du corps 2, attenante à l'arrière du bouton 61, et destinée, d'une manière connue en soi, à actionner un commutateur non représenté qui met le moteur en et hors service et règle sa vitesse de rotation.

Selon l'invention, le batteur-mixeur comporte de plus des moyens mécaniques mobiles 70 sollicités par un ressort de rappel 72 et adaptés, d'une part, à rendre libre le déplacement de l'organe d'éjection 51 tout en entravant le passage interne 74 du fût 31 de manière à permettre uniquement la mise en place des fouets 10 (figure 2), et d'autre part, à bloquer, à l'encontre du ressort de rappel 72, l'organe d'éjection 51 en position basse tout en dégageant le passage interne 74 du fût 31 de manière à permettre uniquement la mise en place du pied mixeur 38 (figure 3).

Dans l'exemple de réalisation illustré aux figures 1 à 3, ces moyens mécaniques dits de sécurité 70 sont constitués par une tringle ou tige métallique coulissante 76 qui est agencée horizontalement sous la partie évidée 4 du corps 2, dont la partie antérieure est réalisée sous la forme d'un organe de blocage débrayable 78 de l'organe d'éjection 51, et dont la partie postérieure est réalisée sous la forme d'une patte d'accrochage 81 engagée, par son extrémité libre formant un ergot 82, à l'intérieur du fût 31 à travers une lumière de débattement 84 ménagée dans la paroi latérale 85 du fût 31.

Dans cet exemple, l'organe de blocage débrayable 78 de l'organe d'éjection 51 est conformé en une fourche verticale à trois dents 86, 87 et 88 dont les extrémités libres respectives de deux d'entre elles, à savoir la dent centrale 87 et la dent supérieure 88, sont reliées entre elles par une surface de butée 91.

Comme le montrent les figures 1 à 3, le ressort de rappel 72 de la tringle 76 est un ressort de compression interposé entre la partie inférieure de la patte d'accrochage 81 de la tringle 76 et une aile verticale 93 ménagée sur la face externe de la paroi latérale 85 du fût 31, à proximité du fond de celui-ci.

Dans la position d'arrêt du batteur-mixeur, en l'absence de tout accessoire, comme illustré à la figure 1, la tringle 76 occupe une position de repos dans laquelle sa partie antérieure aux trois dents 86, 87 et 88 est à l'état débrayé par rapport à l'organe d'éjection 51 en position basse, lequel organe d'éjection est donc rendu libre, tandis que sa patte d'accrochage 81 coopère en appui par son ergot 82 avec la face interne de la paroi latérale 85 du fût 31, sous l'action du ressort de compression 72.

En référence à la figure 2, la tringle 76 occupe une position dite de battage qui correspond à sa position de repos de la figure 1 dans laquelle l'éjecteur est rendu libre et autorise donc la mise en place des fouets 10. Lors de cette mise en place des fouets 10 dans le dispositif d'accouplement correspondant 20, figure 2, l'extrémité libre de chacun des fouets 10 sollicite le pion correspondant 56 de l'organe d'éjection 51 pour faire passer ce dernier de sa position basse à sa position haute dans laquelle une surface de butée 96 prévue sur la branche inférieure de la partie supérieure 52 en forme de U de l'organe d'éjection 51 vient en regard de la surface de butée 91 de la tringle 76 ; ces deux surfaces de butée 91, respectivement 96, en regard l'une de l'autre, sont séparées d'une distance d notablement inférieure à la course c de mise en place complète du pied mixeur dans le fût 31.

Ainsi, dans la position de battage illustrée à la figure 2, si l'utilisateur introduit le pied mixeur par l'ouverture 34, après ouverture de l'obturateur 45, le pied mixeur déplace l'ergot 82 sur la distance d pour laquelle la surface 91 de la tringle 76 vient en butée contre la surface 96 de l'organe d'éjection 51 ; cette distance d étant inférieure à la course totale c du pied mixeur, ce dernier ne peut donc être mis complètement en place dans le fût 31.

A partir de la position de battage de la figure 2, les fouets 10 peuvent être libérés par l'organe d'éjection 51 sous l'action du bouton de commande 61, ledit organe d'éjection 51 revenant à sa position basse telle que montrée à la figure 1.

En référence à la figure 3, la tringle 76 occupe une position dite de mixage en laquelle elle est amenée par coulissement suivant le sens de la flèche F de la figure 1, sous l'action de la mise en place par vissage du pied mixeur 38, après ouverture de l'obturateur 45, provoquant alors le déplacement longitudinal de l'ergot 82 de la patte d'accrochage 81 à l'intérieur du fût 31, à l'encontre du ressort de compression 72 ; en fin de course de vissage du pied mixeur 38, l'arbre 39 de celui-ci est accouplé avec l'entraîneur 28. Dans cette position de mixage, figure 3, la partie supérieure de chaque pion 56 de l'organe d'éjection 51 en position basse est en prise, par l'intermédiaire de son passage d'engagement, avec la dent inférieure 86 de la partie antérieure de la tringle 76 ; l'organe d'éjection 51 étant bloqué en position basse par la partie antérieure de la tringle 76, les fouets ne peuvent donc être mis complètement en place dans leurs dispositifs d'accouplement respectifs 20.

A partir de la position de mixage de la figure 3, le pied mixeur 38 peut être simplement retiré par dévissage, la tringle 76 revenant alors, sous l'action du ressort de compression 72, dans sa position de repos telle que montrée à la figure 1.

## Revendications

1. Batteur-mixeur électrique à main comprenant un corps (2) de forme générale prismatique contenant un moteur d'entraînement électrique (7) qui, en considérant le batteur-mixeur dans sa position d'utilisation normale d'au moins un accessoire dit de battage (10) tel que, par exemple, un fouet, est logé horizontalement dans la partie inférieure (12) dudit corps (2), un dispositif rotatif (20) d'accouplement dudit accessoire de battage (10) qui est agencé dans la partie avant (18) dudit corps (2) en débouchant dans la base (22) de celui-ci, et qui est relié à l'extrémité antérieure (14) de l'arbre (8) du moteur (7), un entraîneur rotatif (28) porté par l'extrémité postérieure (26) de l'arbre (8) du moteur (7) et logé dans un fût cylindrique (31) de fixation d'un accessoire dit de mixage (38) qui s'étend horizontalement dans la partie arrière (35) dudit corps (2) et qui est ouvert en regard d'une ouverture (34) pratiquée dans la paroi arrière (35) du corps (2) et destinée au passage de l'accessoire de mixage (38), lequel accessoire de mixage comporte un arbre (39) dont une extrémité est adaptée à venir s'accoupler avec ledit entraîneur (28), ainsi qu'un organe d'éjection (51) agencé verticalement au-dessus et en communication avec le dispositif d'accouplement (20) de l'accessoire de battage et déplaçable en hauteur d'une position basse à une position haute sous l'action de l'accessoire de battage lors de sa mise en place complète, et inversement de cette position haute à la position basse dans laquelle il libère ledit accessoire de battage sous l'action d'un organe de commande manuelle (61),
**caractérisé en ce qu'**il comporte de plus des moyens mécaniques (70) mobiles sollicités par des moyens de rappel élastique (72) et adaptés, d'une part, à rendre libre le déplacement de l'organe d'éjection (51) tout en entravant le passage (74) à l'intérieur du fût (31) de manière à permettre uniquement la mise en place de l'accessoire de battage, et d'autre part, à bloquer, à l'encontre desdits moyens de rappel élastique (72), l'organe d'éjection (51) en position basse tout en dégageant le passage (74) à l'intérieur du fût (31) de manière à permettre uniquement la mise en place de l'accessoire de mixage.

2. Batteur-mixeur selon la revendication 1,
**caractérisé en ce que** le corps (2) présentant une partie évidée (4) qui délimite une poignée (5), les moyens mécaniques (70) sont constitués par une tringle (76) qui est agencée horizontalement sous la partie évidée (4) dudit corps (2), dont la partie antérieure est réalisée sous la forme d'un organe (78) de blocage débrayable de l'organe d'éjection (51), dont la partie postérieure est réalisée sous la forme d'une patte d'accrochage (81) engagée à son extrémité libre à l'intérieur du fût (31) à travers une lumière (84) ménagée dans la paroi latérale (85) dudit fût, et qui est mobile entre une position dite de battage dans laquelle son organe de blocage débrayable (78) est à l'état débrayé pour lequel l'organe d'éjection (51) est rendu libre, autorisant la mise en place de l'accessoire de battage (10) qui fait passer ledit organe d'éjection (51) de sa position basse à sa position haute, tandis que sa patte d'accrochage (81) coopère en appui avec la face interne de la paroi latérale (85) du fût (31), l'organe de blocage (78) et l'organe d'éjection (51) présentant des surfaces respectives de butée (91;96) qui, dans cette position de battage de la tringle, sont situées en regard l'une de l'autre de façon à interdire, dans cette position de battage, la mise en place complète de l'accessoire de mixage (38), et une position dite de mixage pour laquelle elle est sollicitée à l'encontre desdits moyens de rappel élastique (72) sous l'action de l'accessoire de mixage (38) et dans laquelle sa patte d'accrochage (81) se dégage par suite de la mise en place de l'accessoire de mixage, tandis que son organe de blocage débrayable (78) vient à l'état de blocage pour lequel l'organe d'éjection (51) en position basse est en prise avec ledit organe de blocage (78), interdisant la mise en place de l'accessoire de battage (10).

3. Batteur-mixeur selon la revendication 2,
**caractérisé en ce que** la tringle (76) est montée coulissante et les surfaces respectives de butée (91;96) de l'organe de blocage (78) à l'état débrayé et de l'organe d'éjection (51) en position haute lorsque la tringle (76) est en position de battage, sont séparées l'une de l'autre d'une distance (d) qui est inférieure à la course (c) de mise en place complète de l'accessoire de mixage (38).

4. Batteur-mixeur selon la revendication 3,
**caractérisé en ce que** l'organe d'éjection (51) comportant en sa partie inférieure un pion (56), l'organe de blocage débrayable (78) de la tringle (76) est conformé en une fourche verticale à trois dents (86,87,88) dont les extrémités libres respectives de deux d'entre elles, à savoir la dent centrale (87) et la dent supérieure (88), sont reliées par la surface de butée correspondante (91), ledit pion (56) présentant un passage d'engagement de la dent inférieure (86) de ladite fourche lorsque la tringle (76) est en position de mixage.

5. Batteur-mixeur selon l'une des revendications 2 à 4,
**caractérisé en ce que** les moyens de rappel élastique (72) sont constitués par un ressort de compression interposé entre la partie inférieure de la patte d'accrochage (81) de la tringle (76) et une aile verticale (93) ménagée sur la face externe de la paroi latérale (85) du fût (31), à proximité du fond de celui-ci.

## Claims

1. Electric hand-held beater/mixer comprising a body (2) of generally prismatic shape containing an electric drive motor (7) which, considering the beater/mixer in its normal position of use of at least on so-called beating accessory (10) such as, for example, a whisk, is housed horizontally in the lower part (12) of said body (2), a rotary coupling device (20) for the beating accessory (10) which is arranged in the front part (18) of said body (2), emerging in the base (22) thereof, and which is connected to the front end (14) of the shaft (8) of the motor (7), a rotary driver (28) carried by the rear end (26) of the shaft (8) of the motor (7) and housed in a cylindrical barrel (31) for fixing a so-called mixing accessory (38) which extends horizontally in the rear part (35) of said body (2) and which is open opposite an opening (34) formed in the rear wall (35) of the body (2) and intended for the mixing accessory (38) to pass, which mixing accessory has a shaft (39), one end of which is adapted to come to be coupled with said driver (28), and an ejection device (51) arranged vertically above and in communication with the coupling device (20) for the beating accessory and movable in height from a low position to a high position under the action of the beating accessory when it is completely fitted in place, and conversely from this high position to the low position in which it releases said beating accessory under the action of a manual control member (61),
**characterised in that** it also has movable mechanical means (70) acted on by elastic return means (72) and adapted on the one hand to make free the movement of the ejection device (51) whilst blocking the passage (74) inside the barrel (31) so as to enable only the beating accessory to be fitted, and on the other hand to lock, counter to said elastic return means (72), the ejection device (51) in the low position whilst freeing the passage (74) inside the barrel (31) so as enable only the mixing accessory to be fitted.

2. Beater/mixer according to claim 1,
**characterised in that**, the body (2) having a hollowed-out part (4) which defines a handle (5), the mechanical means (70) consist of a bar (76) which is arranged horizontally underneath the hollowed-out part (4) of said body (2), the front part of which is produced in the form of a disengageable locking member (78) for the ejection device (51), the rear part of which is produced in the form of a hooking lug (81) engaged at its free end inside the barrel (31) through an aperture (84) formed in the lateral wall (85) of said barrel, and which is movable between a so-called beating position in which its disengageable locking member (78) is in the disengaged state in which the ejection device (51) is made free, allowing the fitting of the beating accessory (10) which causes the ejection device (51) to pass from its low position to its high position, whilst its hooking lug (81) cooperates in abutment with the internal face of the lateral wall (85) of the barrel (31), the locking member (78) and the ejection device (51) having respective abutment surfaces (91 ; 96) which, in this beating position of the bar, are situated opposite each other so as to prevent, in this beating position, the complete fitting of the mixing accessory (38), and a so-called mixing position in which it is acted on counter to the elastic return means (72) under the action of the mixing accessory (38) and in which its hooking lug (81) is disengaged consequent upon the fitting of the mixing accessory, whilst its desengageable locking member (78) comes to the locking state in which the ejection device (51) in the low position is in engagement with the locking member (78), preventing the fitting of the beating accessory (10).

3. Beater/mixer according to claim 2,
**characterised in that** the bar (76) is slidably mounted and the respective abutment surfaces (91 ; 96) of the locking member (78) in the disengaged state and of the ejection device (51) in the high position when the bar (76) is in the beating position, are separated from each other by a distance (d) which is less than the complete fitting travel (c) of the mixing accessory (38).

4. Beater/mixer according to claim 3,
**characterised in that**, the ejection device (51) having a stud (56) in its bottom part, the disengageable locking member (78) for the bar (76) is shaped like a vertical fork with three teeth (86, 87, 88), the respective free ends of two of them, namely the middle tooth (87) and the top tooth (88), being connected by the corresponding abutment surface (91), said stud (56) having an engagement passage for the bottom tooth (86) of the fork when the bar (76) is in the mixing position.

5. Beater/mixer according to claims 2 to 4,
**characterised in that** the elastic return means (72) consist of a compression spring interposed between the bottom part of the hooking lug (81) of the bar (76) and a vertical wing (93) formed on the external face of the lateral wall (85) of the barrel (31), close to the bottom of the latter.

## Patentansprüche

1. Elektrisch betriebener Handschläger-Mixer mit einem Körper (2) von im ganzen prismatischer Form, der einen elektrischen Antriebsmotor (7) enthält, der, wenn man den Schläger-Mixer in seiner normalen Gebrauchsstellung mit mindestens einem sogenannten Schlagzusatz (10), wie einem Quirl, betrachtet, horizontal im unteren Teil (12) des Körpers (2) sitzt, mit einer drehbaren Kupplungsvorrichtung (20) für den Schlagzusatz (10), die im vorderen Teil des Körpers (2) ausgebildet ist und in dessen Basis (22) mündet und mit dem vorderen Ende (14) der Welle (8) des Motors (7) verbunden ist, einem drehbaren Mitnehmer (28), der vom hinteren Ende (26) der Welle (8) des Motors (7) getragen ist und in einem zylindrischen Schaft (31) zur Befestigung eines sogenannten Mixzusatzes (38) sitzt, der sich horizontal im hinteren Teil (35) des Körpers (2) erstreckt und bezüglich einer Öffnung (34) offen ist, die in der Rückwand (35) des Körpers (2) ausgebildet und für den Durchtritt des Mixzusatzes (38) bestimmt ist, wobei der Mixzusatz eine Welle (39) aufweist, von der ein Ende zur Kupplung mit dem Mitnehmer (28) eingerichtet ist, und mit einem Ausstoßelement (51), das vertikal oberhalb und in Verbindung mit der Kupplungsvorrichtung (20) des Schlagzusatzes angeordnet und der Höhe nach aus einer unteren Stellung in eine obere Stellung unter der Wirkung des Schlagzusatzes bei dessen vollständigem Einsetzen und umgekehrt aus dieser oberen Stellung in die untere Stellung verschiebbar ist, in der es den Schlagzusatz unter der Wirkung eines handbetätigten Steuerelements (61) freigibt, **dadurch gekennzeichnet**, **daß** er außerdem eine bewegliche mechanische Vorrichtung (70) aufweist, die durch eine elastische Rückstellvorrichtung (72) beaufschlagt und dafür eingerichtet ist, einerseits die Verschiebung des Ausstoßelements (51) freizugeben, wobei sie gleichzeitig in den Durchlaß (74) im Inneren des Schafts (31) so eindringt, daß nur das Einsetzen des Schlagzusatzes ermöglicht wird, und andererseits gegen die elastische Rückstellvorrichtung (72) das Ausstoßelement (51) in der unteren Stellung zu blockieren, wobei der Durchlaß (74) zum Inneren des Schafts (31) freigegeben wird, so daß nur das Einsetzen des Mixzusatzes möglich ist.

2. Schläger-Mixer nach Anspruch 1, **dadurch gekennzeichnet, daß** der Körper (2) einen ausgenommenen Teil (4) aufweist, der einen Handgriff (5) begrenzt, daß die mechanische Vorrichtung (70) aus einem Gestänge (76) besteht, das horizontal unter dem ausgenommenen Teil (4) des Körpers (2) angeordnet ist und dessen vorderer Teil in Form eines ausschaltbaren Blockierungselements (78) des Ausstoßelements (51) ausgebildet ist und dessen hinterer Teil in Form eines Hakens (81) ausgebildet ist, der mit seinem freien Ende durch einen in der Seitenwand (85) des Schafts (31) ausgebildeten Schlitz (84) in das Innere des Schafts (31) eingreift, wobei das Gestänge zwischen einer sogenannten Schlagstellung, in der sein ausschaltbares Blockierungselement (78) in ausgeschaltetem Zustand ist, in welchem das Ausstoßelement (51) freigegeben ist und das Einsetzen des Schlagzusatzes (10) gestattet, der dabei das Ausstoßelement (51) aus seiner unteren in seine obere Stellung bringt, während sein Haken (81) gegen die Innenseite der Seitenwand (85) des Schafts (31) anschlägt, wobei das Blockierungslement (78) und das Ausstoßelement (51) jeweils Anschlagflächen (91;96) aufweisen, die in dieser Schlagstellung des Gestänges einander gegenüber liegen, so daß sie in dieser Schlagstellung das vollständige Einsetzen des Mixzusatzes (38) verhindern, und einer sogenannten Mixstellung bewegbar ist, in die das Gestänge gegen die elastische Rückstellvorrichtung (72) unter der Wirkung des Mixzusatzes (38) gebracht wird und in der sein Haken (81) unter der Wirkung des Einsetzens des Mixzusatzes freikommt, während sein ausschaltbares Blockierungselement (78) in den Blockierungszustand gelangt, in welchem das Ausstoßelement (51) in der unteren Stellung in Eingriff mit dem Blockierungselement (78) ist und so das Einsetzen des Schlagzusatzes (10) verhindert.

3. Schläger-Mixer nach Anspruch 2, **dadurch gekennzeichnet, daß** das Gestänge (76) verschiebbar montiert ist und die jeweiligen Anschlagflächen (91; 96) des Blockierungselements (78) im ausgeschalteten Zustand und des Ausstoßelements (51) in der oberen Stellung voneinander durch einen Abstand d getrennt sind, der kleiner ist als die Wegstrecke c beim vollständigen Einsetzen des Mixzusatzes (38).

4. Schläger-Mixer nach Anspruch 3, **dadurch gekennzeichnet, daß** das Ausstoßelement (51) an seinem unteren Teil einen Stift (56) aufweist und das ausschaltbare Blockierungselement (78) des Gestänges (76) mit einer vertikalen Gabel mit drei Zinken (86, 87, 88) ausgebildet ist, wobei die freien Enden von jeweils zwei derselben, nämlich der Mittelzinke (87) und der oberen Zinke (88) durch die entsprechende Anschlagfläche (91) verbunden sind, und wobei der Stift (56) eine Durchlaßöffnung für den Eingriff der unteren Zinke (86) der Gabel aufweist, wenn das Gestänge (76) in der Mixstellung ist.

5. Schläger-Mixer nach einem der Ansprüche 2 bis 4, **dadurch gekennzeichnet, daß** die elastische Rückstellvorrichtung (72) aus einer Druckfeder besteht, die zwischen dem unteren Teil des Hakens (81) des Gestänges (76) und einem an der Außenseite der Seitenwand (85) des Schafts (31) in der Nähe von dessen Boden ausgebildeten senkrechten Flügel (93) eingesetzt ist.
